# EUROPÄISCHE PATENTANMELDUNG

(11) **EP 0 860 366 A1**
(43) Veröffentlichungstag der Anmeldung: **26.08.1998**
(21) Anmeldenummer: 98101759.3
(22) Anmeldetag: 02.02.1998
(51) Int. Cl.: B65D 6/24, B65D 6/18, B65D 19/18, B65D 88/52

(54) **Faltbarer Grosscontainer**

(30) Priorität: 24.02.1997 DE 29703221 U
(71) Anmelder: remaplan Anlagenbau GmbH, 94405 Landau (DE)
(72) Erfinder: Soska, Gerhard, 84307 Eggenfelden (DE); Koch, Oliver, 87463 Dietmannsried (DE); Sipos, Thomas, 84130 Dingolfing (DE); Rüttnauer, Rochus, 94405 Landau/Windschnur (DE)
(74) Vertreter: Patentanwälte Dr. Solf & Zapf

(57) **Zusammenfassung**

Faltbarer Großcontainer (7) in Quaderform aus Kunststoff mit einer palettenförmigen, eine Bodenplatte aufweisenden Bodenkonstruktion (8) sowie zwei Stirn- und zwei Seitenwänden (3,4,5,6) sowie einer Öffnungseinrichtung, wodurch eine Verhakungseinrichtung (3a,6b) als Anschlußeinrichtung zwischen den Seiten- und den Stirnwänden (5,6,3,4), die bei Einwirkung von Innendruck kraftschlüssig ineinander greift.

## Beschreibung

Die Erfindung betrifft einen faltbaren Großcontainer aus Kunststoff, insbesondere aus Recyclingkunststoff.

Ein derartiger Behälter ist in der Regel quaderförmig ausgebildet und weist vier Seitenwände, einen zu öffnenden einteiligen oder mehrteiligen Deckel sowie eine palettenartige Bodenkonstruktion mit einer Bodenplatte und mit Einrichtungen für eine Beförderung mit z.B. Gabelhubwagen auf. Anstelle des zu öffnenden Deckels oder in Kombination damit kann auch eine Seitenwand zum Öffnen des Containers eingerichtet sein.

Die Seitenwandungen stehen mit der Bodenplatte jeweils über eine Scharniereinrichtung derart in Verbindung, daß die Seitenwandungen nacheinander aufeinander klappbar sind. Die Bodenplatte ist Teil einer unterseitigen Paletteneinrichtung mit Palettenfüßen und Einfahröffnungen für Gabeln, z.B. eines Hubgabelwagens.

Ein derartiger sogenannter faltbarer Behälter wird für den Transport von z.B. losen oder abgepackten Gütern, aber auch von in sogenannten Inlinern aufgewahrten Flüssigkeiten verwendet. Nach dem Entladen des transportierten Gutes wird der Behälter zusammengefaltet und z.B. nach einem Rücktransport einer Wiederverwendung zugeführt. Die gefalteten Behälter sind derart stapelbar, daß sie gestapelt einen relativ geringen Transportraum beim Rücktransport einnehmen.

Für spezielle Transportgüter, wie z.B. in Inlinern aufbewahrte Flüssigkeiten, wird gefordert, daß der Container dynamischen Stoßbelastungen bestimmten Ausmasses widersteht, so daß der Behälter z.B. bei einem Aufprall nach z.B. einem freien Fall oder dgl. nicht zerbirst. Dieser Forderung entsprechen die bekannten Großcontainer nicht oder nur ungenügend.

Aufgabe der Erfindung ist es, einen faltbaren Großcontainer mit einfachen Mitteln derart auszubilden, daß er höhere dynamische, insbesondere vom Innenraum her wirkende Belastungen aufnehmen kann als bekannte Großcontainer.

Diese Aufgabe wird durch die Merkmale des Anspruches 1 gelöst. Vorteilhafte Weiterbildungen der Erfindung werden in den Unteransprüchen gekennzeichnet.

Anhand der Zeichnung wird die Erfindung im folgenden beispielhaft näher erläutert. Es zeigen:
- Fig. 1: eine perspektive Darstellung des vollständig entfalteten Containers;

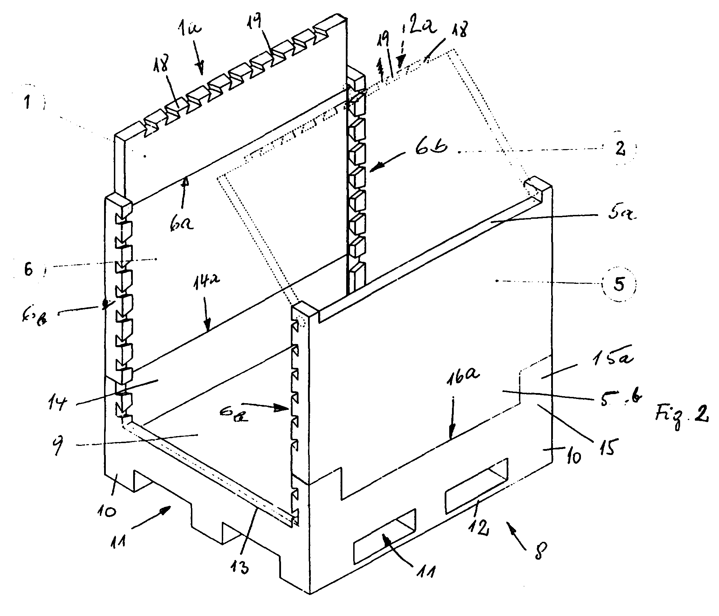

- Fig. 2: eine perspektivische Darstellung des Containers ohne Stirnwände;

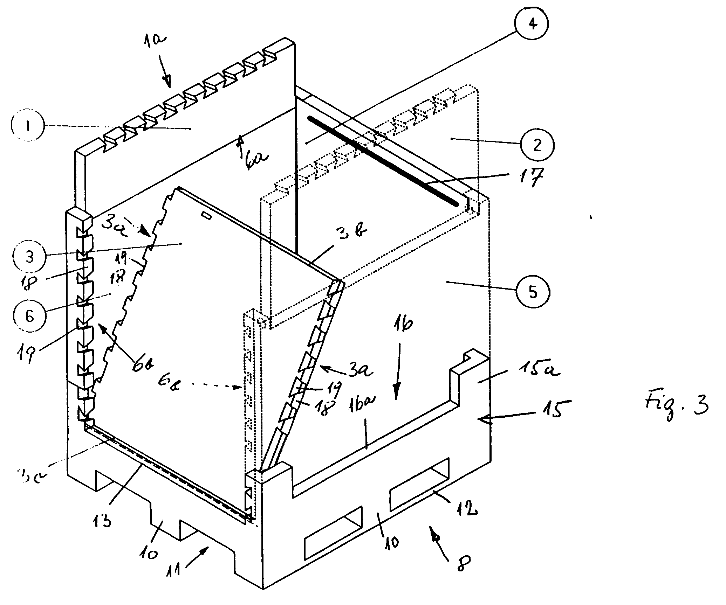

- Fig. 3: eine perspektivische Darstellung des Containers mit einer eingeschwenkten und einer einzuschwenkenden Stirnwand;
- Fig. 4: eine Stirnansicht eines gefalteten Containers mit einem weiteren aufgestapelten Container.

Der faltbare Großcontainer 7 weist im wesentlichen eine Bodenkonstruktion 8, zwei Stirnwände 3, 4, zwei Seitenwände 5, 6 und eine zweigeteilte Deckelwandung, bestehend aus den Deckelteilen 1 und 2, auf.

Die Bodenkonstruktion 8 ist palettenartig ausgebildet mit einer Bodenplatte 9 und mit - wie an sich bekannt - unter der Bodenplatte sowie in der Mitte der Seitenkantenbereiche und im Palettenmittenbereich angeordneten Füßen 10. Zwischen den Füßen 10 sind Einfahröffnungen 11 für das Einfahren von Gabeln z.B. eines Hubgabelwagens vorgesehen. Die Füße 10 können über bodenseitige Kufenstege 12 miteinander in Verbindung stehen.

Im Bereich der stirnwandseitigen Bodenplattenkanten sind an die Bodenplatte 9 vertikale Stirnwandsockelleisten 13 geringer Höhe angeformt, von denen die zur Stirnwand 3 gehörende Leiste 13 eine Höhe aufweist, die der Dicke der Stirnwand 3 entspricht und die zur Stirnwand 4 gehörende, nicht dargestellte Leiste 13 eine um die Dicke der Stirnwand 4 größere Höhe aufweist; im Bereich der Bodenplattenkante, über dem sich die eine Seitenwand 6 befindet, ist eine noch höhere Seitenwandsockelleiste 14 angeformt; im Bereich der Bodenplattenkante, über dem sich die zweite Seitenwand 5 befindet, ist eine im Vergleich zur Leiste 14 noch etwas höhere Seitenwandsockelleiste 15 angeformt, die aber in ihrer Längserstreckkung eine U-förmige Ausnehmung 16 aufweist, deren Leistenoberkante 16a etwas tiefer liegt als die Oberkante 14a der Leiste 14, so daß Eckpfeiler 15a überstehen über die Oberkante 14a.

An die Oberkante 14a der Leiste 14 ist mit einer Scharniereinrichtung (nicht dargestellt) die Seitenwand 6 angesetzt, so daß die Seitenwand 6 zum Behälterinnenraum hin verschwenkt werden kann. Ebenso scharnierend ist die Seitenwand 5 an die Oberkante 16a der Leiste 15 angesetzt, wobei an der Unterkante der Seitenwand 5 ein U-förmiger Vorsprung 5b angeformt ist, der in die U-förmige Ausnehmung 16 paßt.

Mit jeweils einer Scharniereinrichtung (nicht dargestellt) ist an die Oberkante 6a der Seitenwand 6 ein Deckelwandungsteil 1 und an die Oberkante 5a der Seitenwand 5 das korrespondierende Deckelwandungsteil 2 angelenkt, die sich zu einem Deckel ergänzen und auf- und zugeklappt werden können. Dabei können Anschlagleisten 17 auf der Innenseite der Stirnwandungen 3, 4 seitliche Auflager für die Deckelwandungsteile 1, 2 bilden.

Nach der Erfindung sind an den eine ebenflächige bzw. geradlinige Ober- und Unterkante 3b, 3c aufweisenden vertikalen Seitenkanten der Stirnwand 3, 4 horizontal nach außen vorspringende Zähne 18 und entsprechende Zahnlücken 19, vorzugsweise jeweils in Form einer Zahnleiste 3a, angeformt. Die Zähne 18 sind - von außerhalb des Behälters in der Ansicht betrachtet - schwalbenschwanzförmig ausgebildet; demgemäß sind auch die Zahnlücken 19 schwalbenschwanzförmig. Wesentlich ist, daß sich die Zähne 18 - in der Draufsicht auf die Zahnoberfläche betrachtet - zur Außenseite des Behälters hin konisch verbreitern und sich die Zahnlücken 19 entsprechend konisch verengen.

Eine mit der Zahnleiste 3a korrespondierende Zahnleiste 6b springt von den vertikalen Seitenwandkanten der Seitenwände 5, 6 sowie den angrenzenden Leisten 14 und 15 in Richtung Stirnwand 3, 4 vor. Die Stirnwände 3, 4 können mit ihren Zahnleisten 3a somit vom Innenraum des Behälters in die Zahnleisten 6b der Seitenwände 5, 6 geschoben oder geschwenkt werden, wonach die Zähne 18 zumindest teilbereichsweise formschlüssig in die Zahnlücken 19 greifen. Bei einer vom Innenraum des Behälters her wirkenden Kraft auf die Stirnwände 3, 4 und/oder Seitenwände 5, 6 verkeilen sich die Zähne kraftschlüssig sowohl in Richtung der Wandebenen als auch senkrecht dazu nach außen. Auf diese Weise können insbesondere sehr hohe aus dem Innenraum des Behälters wirkende Kräfte aufgenommen werden, ohne daß der Behälter an den Angrenzungsstellen der Wände birst.

An den Wänden 3, 4, 5, 6 und den Deckelteilen 1, 2 werden zudem derartige Kräfte von den Scharniereinrichtungen abgefangen.

Nach einer besonderen Ausführungsform der Erfindung sind auch die einander zugekehrten Deckelkanten der Deckelteile 1, 2 als Zahnleisten 1a, 2a ausgeformt mit vorzugsweise gleichen Zahnformen 18 und Zahnlücken 19 wie bei den Zahnleisten 3a, 6b, wobei die Verzahnung der Zahnleisten so ausgebildet ist, daß bei der Verschwenkung die Verzahnung ineinandergebracht werden kann.

Selbstverständlich liegt es auch im Rahmen der Erfindung, wenn anstelle von Scharniereinrichtungen die Seitenwände 5, 6 mit den Sockelleisten 14, 15 der Bodenplatte 9 über entsprechende Zahnleisten in Verbindung stehen. Ebenso können die Wände 3, 4 auch auf den Sockelleisten 13 über entsprechende Zahnleisten in Verbindung stehen. Zudem liegt es im Rahmen der Erfindung, andere Zahnformen oder Zahnelemente zu verwenden, die die Kräfte durch entsprechende Hinterschneidungen sowohl in Wandebenenrichtung als auch senkrecht dazu nach außen wirkend aufnehmen können. Anstelle einer Verzahnung können auch andere kraftaufnehmende Verhakungen mit hintergreifenden Elementen, z.B. in Form von Leisten, verwendet werden.

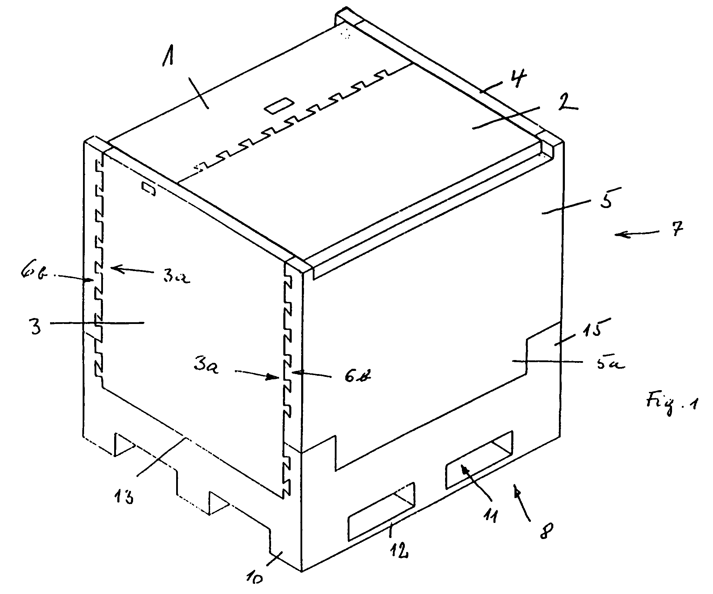

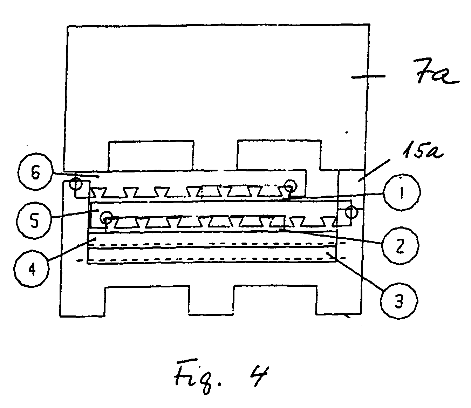

Zweckmäßigerweise ist jede Wand 3, 4, 5 und 6 mit der zugehörigen Sockelleiste 13, 14 und 15 über eine Scharniereinrichtung verbunden, wobei die Sockelleistenhöhe jeweils so eingerichtet ist, daß die Wände nacheinander horizontal aufeinandergeklappt werden können und danach nahezu lückenlos aufeinanderliegen. Die Verzahnung ist in diesem Fall raumformmäßig derartig ausgebildet, daß die Zähne 18 in die Zahnlücken 19 auf einer Schwenkbahn eingebracht werden können bzw. daß die Verzahnung das Verschwenken der Wände in ihre entfaltete Position nicht stört. Im dargestellten Beispiel wird der in Fig. 1 erkennbare Großbehälter gefaltet, indem zunächst das Deckelteil 1 und danach das Deckelteil 2 hochgeschwenkt werden. Danach wird die Stirnwand 3 und im Anschluß daran die Stirnwand 4 eingeklappt. Schließlich wird die Seitenwand 5 mit untergeklapptem Deckelteil 2 und als letztes die Seitenwand 6 mit untergeklapptem Deckelteil 1 verschwenkt. Daraus resultiert der gefaltete Container gemäß Fig. 4. Die Eckpfeiler 15 sind so hoch ausgebildet, daß ihre Oberkante mit der außenliegenden Oberfläche der eingeklappten Wand 6 fluchtet.

Sie bilden - wie Fig. 4 verdeutlicht - zusammen mit der Wand 6 Auflager für den nächsten aufgesetzten gefalteten Behälter 7a für die Stapelbildung.

## Patentansprüche

1. Faltbarer Großcontainer in Quaderform aus Kunststoff mit einer palettenförmigen, eine Bodenplatte aufweisenden Bodenkonstruktion sowie zwei Stirn- und zwei Seitenwänden sowie einer Öffnungseinrichtung,
**gekennzeichnet durch**
eine Verhakungseinrichtung als Anschlußeinrichtung zwischen den Seiten- und den Stirnwänden (5, 6, 3, 4), die bei Einwirkung von Innendruck kraftschlüssig ineinander greift.

2. Großcontainer nach Anspruch 1,
**dadurch gekennzeichnet,**
daß die Verhakungseinrichtung eine Verzahnung ist.

3. Großcontainer nach Anspruch 2,
**dadurch gekennzeichnet,**
daß die Verzahnung in Form von Zahnleisten (3a, 6b) ausgebildet ist.

4. Großcontainer nach Anspruch 2 und/oder 3,
**gekennzeichnet durch**
schwalbenschwanzförmige Zähne (18) und schwalbenschwanzförmige Zahnlücken (19), wobei die Zähne (18) sich zur Außenseite des Containers hin verbreitern und die Zahnlücken (19) sich entsprechend verengen.

5. Großcontainer nach einem oder mehreren der Ansprüche 2 bis 4,
**dadurch gekennzeichnet,**
daß die Zähne (18) und die Zahnlücken (19) der zugeordneten Zahnleisten (3a, 6b) für den seitlichen Eingriff derart ausgebildet sind, daß sie ineinander schwenkbar sind.

6. Großcontainer nach einem oder mehreren der Ansprüche 1 bis 5,
**dadurch gekennzeichnet,**
daß die Wände (5, 6) mit einer Scharniereinrichtung an der Bodenkonstruktion (8) angeordnet sind.

7. Großcontainer nach Anspruch 6,
**dadurch gekennzeichnet,**
daß auch die Stirnwände (3, 4) mit einer Scharniereinrichtung an der Bodenkonstruktion (8) angeordnet sind.

8. Großcontainer nach Anspruch 6 und/oder 7,
**dadurch gekennzeichnet,**
daß die Wände (3, 4, 5, 6) an auf der Bodenplatte (9) der Bodenkonstruktion (8) angeordneten Sockelleisten (13, 14, 15) angelenkt sind, deren Höhe so gewählt ist, daß die Wände nacheinander nahezu lückenlos aufeinanderklappbar sind.

9. Großcontainer nach einem oder mehreren der Ansprüche 1 bis 5,
**dadurch gekennzeichnet,**
daß die Wände (3, 4, 5 und 6) mit Zahnleisten (3a, 6b) an der Bodenkonstruktion (8), insbesondere an den Sockelleisten (13, 14, 15), angeordnet sind.

10. Großcontainer nach einem oder mehreren der Ansprüche 1 bis 9,
**dadurch gekennzeichnet,**
daß die Sockelleiste (15) eine U-förmige Ausnehmung (16) aufweist, in die formschlüssig ein Vorsprung (5a) der Wandung (5) eingreift.

11. Großcontainer nach Anspruch 10,
**dadurch gekennzeichnet,**
daß aus der Ausnehmung (16) Eckpfeiler (15a) resultieren, deren Oberkante im gefalteten Zustand des Großcontainers mit der Außenfläche der obersten Wandung (6) fluchtet.

12. Großcontainer nach einem oder mehreren der Ansprüche 1 bis 11,
**dadurch gekennzeichnet,**
daß die Bodenkonstruktion (8) Palettenfüße (10) sowie Einfahröffnungen (11) aufweist.

13. Großcontainer nach einem oder mehreren der Ansprüche 2 bis 12,
**gekennzeichnet durch**
eine zweigeteilte Deckelwandung, bestehend aus den Deckelteilen (1) und (2), wobei die einander zugekehrten Deckelkanten als Zahnleisten (1a, 2a) mit schwalbenschwanzförmigen, sich nach außen verbreiternden Zähnen (18) und sich nach außen verjüngenden Zahnlücken (19), ausgebildet sind.
